# EUROPEAN PATENT APPLICATION

(11) **EP 0 922 475 A1**
(43) Date of publication of application: **16.06.1999**
(21) Application number: 98901981.5
(22) Date of filing: 11.02.1998
(51) Int. Cl.: B01D 21/26

(54) **EQUIPMENT FOR THE DEPOSITION OF ADHERENT MATERIAL CONTAINED IN A SUSPENSION**

(30) Priority: 06.03.1997 ES 9700493
(71) Applicant: UNIVERSIDAD COMPLUTENSE DE MADRID, E-28040 Madrid (ES)
(72) Inventor: TIJERO MIQUEL, Julio, Depart. de Ingeniera Quimica, E-28040 Madrid rid (ES); BLANCO SUAREZ, Maria, Dept. de Ingenieria Quimica, E-28040 Madrid (ES); NEGRO ALVAREZ, Carlos, Dept. de Ingenieria Quimica, E-28040 Madrid (ES); GARCIA MARTIN, Julia, Dept. de Ingeniera Quimica, E-28040 Madrid (ES); MONTE LARA, Concepcion, Dept de Ingenieria Quimica, E-28040 Madrid (ES)
(74) Representative: Carpintero Lopez, Francisco
(86) International application number: ES9800029
(87) International publication number: WO9839079

(57) **Abstract**

The equipment comprises a rotor (2) consisting of a shaft (3) connected to a means (4) turning the rotor and a disc (5) having at least two holes (6), one in each flat disc surface, interconnected by means of an inner duct (7) having an outlet hole (8) lying in the side surface of the disc (5), and an assembly comprising a tube support (9) and sheets for the deposition of adherent matter contained in the sample to be analysed. The shaft (3) can also be connected to an agitator (13) beneath the disc (5). The equipment can be used in a method for determining and analysing adherent matter contained in a paper pulp suspension and as a model for the influence of process variables on the potential for their deposition.

## Description

### FIELD OF THE INVENTION

This invention relates to an equipment for the deposition of adherent matter contained in a suspension, namely for instance a paper pulp suspension.

### BACKGROUND OF THE INVENTION

Matter of an adherent nature contained in paper suspensions is a complex mixture of natural organic and/or synthetic matter of a largely polymeric nature, which have the following characteristics in common: water-repellence, low surface tension, sticky nature and plasticity. Said characteristics are responsible for the deposition of the compounds on the surfaces of the various equipment used in the papermaking process or on the end product. The deposition process is influenced by several papermaking process variables, namely for instance consistency, pH, temperature, addition of chemicals, ionic strength of the medium and shearing, to such an extent that a sudden change of any of these variables may result in a destabilisation of the dissolved, colloidal matter and in its agglomeration and deposition. The main source of contaminants which may potentially form

adherent deposits are virgin fibres (resinous compounds), secondary fibres (masking tapes, labels, thermofusible adhesives, waxes, latex, ink and rubber) and additives which build up in the process waters (limy soaps and polyelectrolytes which are not retained).

The problems caused by these deposits may be classified in two major groups [Crawford D.J., Appita J. 45(4):257-259 (1992); Fogarty T.J., TAPPI Pulping Conference Proceedings, pages 429-437 (1992); Ouellette A.J., Progress in Paper Recycling, pages 85-88, February (1995); Rhodes T., TAPPI Papermakers Conference Proceedings, pages 301-304 (1995]:
- product quality problems, such as stains, holes, decreased mechanical strength and adverse effects in operations such as gluing, coating, printing, etc; and
- operational process problems reducing system efficiency and increasing production costs, such as tearing of the paper band and deposits on fabrics, blankets, rollers, blades, scrapers, etc., which requires stopping the machine many more times for cleaning purposes and therefore results in a greater number of machine idle times.

These problems are worsened due to current papermaking trends which comprise the use of lower quality pulps and secondary fibres, a greater recirculation of process waters and a greater use of additives, which increases the number and concentration of contaminants present in the medium, and on the other hand the increased speed of machines.

Consequently, the problem of the formation of adherent deposits in paper and cardboard factories is one of the primary sources of economic losses of this industrial sector.

In order to establish the most suitable system for controlling the problems derived from deposits of an adherent kind in paper and cardboard factories, it is important to identity their nature, source and the manner in which they are formed, and further to quantify the same. Determining the contaminants provided by the various pulps and their potential to be deposited and build up in the medium is therefore of great importance to the papermaking industry.

Several quantitative methods have been described by scientific bibliography to determine which matter has potential to form adherent deposits based on its water-repellent nature and therefore its capacity to be deposited on a surface such as a polyethylene bottle or film, polypropylene foam, polyester fabric, a metal or glass cup or an agitator. In these cases, when the deposition time is over, the adherent matter deposited on said surfaces is gravimetrically determined or the deposition surface is determined by means of an image analyser [Doshi M.R., Dyer J.M. and Krueger W.C., Pulp and Paper Canada, 113-117, March (1984); Dykstra G.M., Hoekstra P.M. and Suzuki T., TAPPI Papermakers Conference Proceedings, pages 327-349 (1988); Elsby L.E., Tappi Pulping Conference Proceedings, pages 327-340 (1988); Doshi M.R., Progress in Paper Recycling, pages 45-48, November (1992); Cathie K., Haydock R. And Dias I., Pulp and Paper Canada, 93(12):157-160 (1992); Doshi M.R., Progress in Paper Recycling, 102-105, February (1995); Tappi Routine Control Method RC-324].

The main limitation posed by current methods is the absence of a control of the system fluid dynamic conditions, which provide no assurance that a homogeneous suspension will be had in perfect mixing conditions and which hugely affects the results obtained. On the other hand, current methods simulate deposition in stirred tanks but the resulting shearing does not simulate impact deposition and cannot be used, on a laboratory scale, to predict which deposits might for instance be generated in the paper machine feedbox or in the high turbulence papermaking process areas.

There is consequently a self-evident need to have a method to easily and reproducibly determine the adherent matter contained in a suspension, such as a paper pulp suspension, which overcomes the above-mentioned drawbacks and limitations. It would to such end be advisable, inter alia, to have an equipment enabling the adherent matter contained in a sample of said suspension to be simply collected. This objective may be achieved using the equipment for the deposition of adherent matter provided by this invention.

### DISCLOSURE OF THE INVENTION

The equipment subject of this invention has been devised in order to solve the above-mentioned problems, fostering the deposition of adherent matter contained in a suspension by impacting a sample of said suspension onto a surface due to the centrifugal force generated on turning a rotor lying within the analysed sample. The equipment of this invention therefore allows the high turbulence undergone by the paper pulp suspension in the papermaking process on an industrial scale to be simulated. An agitator may optionally be arranged on the lower end of the rotor shaft in order to increase the pulp suspension turbulence and simulate flow deposition in stirred tanks.

The simplest embodiment of the equipment for the deposition of adherent matter contained in a suspension subject of this invention comprises:
- a rotor consisting of a shaft operatively connected at one end to a means turning the rotor and allowing its speed to be adjusted and, at the other end, to a cylindrical disc having at least two inlet holes, one in each of the flat disc surfaces, interconnected through an inner duct having an outlet hole lying in the side surface of the disc; and
- a container for collecting the deposition of matter contained in the sample to be analysed.

The disc may have a variable number of inlet holes in each of the flat disc surfaces, those on the top surface interconnected in twos with the respective inlet holes on the underside of the disc by means of inner ducts ending in an outlet hole lying in the side wall of the disc. The disc can be made of a material with a low deposition potential or may be treated with a non-stick coating material.

The container for collecting adherent matter deposits consists of a tube support to which sheets for the deposition of adherent matter are fixed inside and/or outside the same, both of which are contained in a sample vessel or reservoir containing the sample to be analysed. The sheets for the deposition of adherent matter can be made of a material which fosters the deposition of adherent particles present in the sample to be analysed.

The equipment also has means for fixing the tube support over which the deposition sheets are superimposed, which means comprise, in a specific embodiment, a number of walls which may occasionally serve as deflecting walls, connected to said deposition containers and a support through conventional fixing elements, such as screws or pins. Pins may additionally be used for fixing the sheets for the deposition of adherent matter to the tube support.

An agitator may also optionally be arranged at the bottom end of the rotor shaft, beneath the disc, made of a material which does not interfere with the deposition of adherent matter, as the shaft material.

### BRIEF DESCRIPTION OF THE FIGURES

Figure 1 is a schematic representation of a specific embodiment of an equipment for the deposition of adherent matter provided by this invention, showing its various components.
Figure 2 is a schematic representation of a second embodiment of an equipment for the deposition of adherent matter provided by this invention, which includes an agitator at the bottom end of the shaft.
Figure 3 is a schematic representation of the flow of suspension through the disc when the latter is turning.
Figure 4 is a graphic representation of the results obtained with an embodiment of an equipment for the deposition of adherent matter present in a paper pulp suspension when turbulence, temperature of the sample and test time are varied.
   (g) is the quantity deposited
   (rpm) the turning speed
   (°C) the temperature
   (min) the test time.

### DETAILED DESCRIPTION OF THE INVENTION

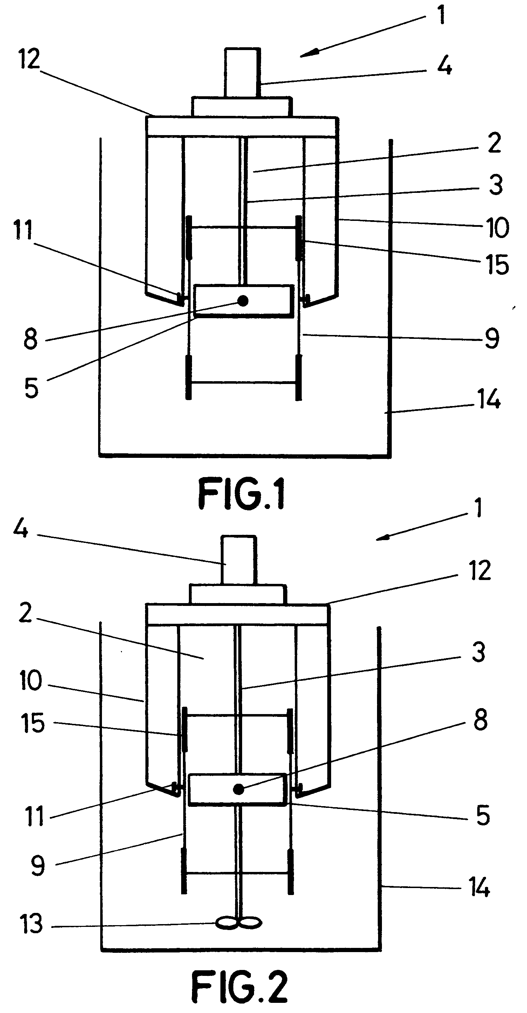

The invention will now be described in further detail with reference to the Figures attached hereto. It follows from Figures 1-3 that the equipment (1) for the deposition of adherent matter contained in a suspension comprises:
- a rotor (2) consisting of a shaft (3) operatively connected at one end to a means (4) tuning the rotor and allowing its turning speed to be adjusted and, at the other end, to a cylindrical disc (5) having at least two inlet holes (6), each one lying in each of the flat disc (5) surfaces, interconnected through an inner duct (7) having an outlet (8) lying in the side surface of the disc (5); and
- a tube support (9) to which which sheets may be fixed on the inside and outside for the deposition of adherent matter by means of conventional fixing elements, such as pins (15).

The equipment (1) may also have walls (10) connected through fixing elements (11) to the deposition means (9) and a support (12).

An agitator (13) may also optionally be placed at the end of the shaft (3) beneath the disc (5), as shown in Figure 2.

The means (4) turning the rotor (2) and allowing its turning speed to be adjusted, can consist of a motor, such as an electric motor, allowing the rotor (2) turning speed to be adjusted within a suitable range of speeds, for instance simulating the true paper pulp production process conditions on an industrial scale.

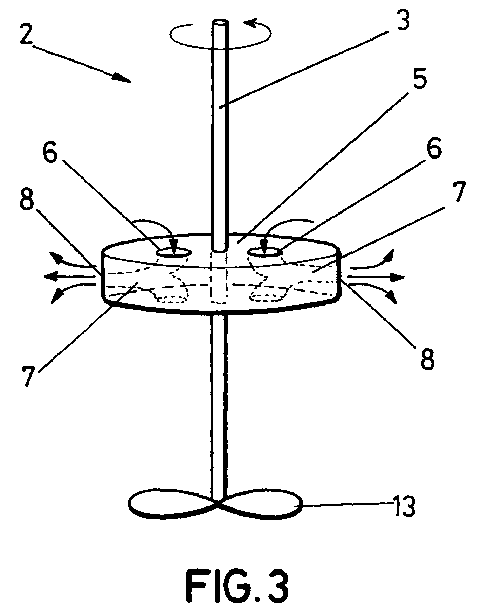

The disc (5) may have a variable number of holes (6) in each of the flat disc (5) surfaces, those on the top surface interconnected in twos with the respective holes on the underside of the disc (5) by means of inner ducts (7) ending in an outlet hole (8) lying in the side wall of the disc (5) [see Figure 3]. In a specific embodiment of this invention, the disc has 2 pairs of holes (6) lying in the flat disc surfaces symmetrically arranged with respect to the shaft (3), as shown in Figure 3. The disc (5) can be made of a material having a low deposition potential or may otherwise be treated with a non-stick coating material of polytetrafluoroethylene, teflon or polymers having similar surface characteristics.

Both the tube support (9) and the sheets for the deposition of adherent matter are contained within a sample vessel or reservoir (14) containing the suspension sample to be analysed. These deposition sheets can be made of a construction or coating material fostering the deposition of adherent particles present in the sample to be analysed, selected from a group comprising ground glass, stainless steel, carbon steel, nylon, polyethylene and polyester fabrics and blankets, in general, materials representing the various parts of the paper machine or plant process water circuit, and having such thicknesses that the weight is most suited to the measured object. The means for fixing the sheets for the deposition of adherent matter to the tube support can be pins (15) made of a material which does not interfere with the deposition of adherent matter.

In a specific embodiment, as shown in Figures 1 and 2, the means for fixing the assembly formed by the tube support (9) and the sheets for the deposition of adherent matter comprise walls (10) connected by means of conventional fixing elements (11), such as screws or pins, to the deposition containers (9) and a support (12).

If used, the agitator (13) is arranged at the end of the shaft (3), beneath the disc (5). This agitator must be a propeller agitator in order for the flow to be axial, and may be made of a material which should preferably not interfere with the deposition of adherent matter, such as stainless steel or any other material provided with a non-stick coating of polytetrafluoroethylene, teflon or polymers having similar surface characteristics.

The working principle of the equipment subject of this invention is based on the depression created by action of the centrifugal force generated upon the rotation of a rotor comprising a cylindrical disc having internal ducts, with an opening in both of the flat disc surfaces, leading to the side surface of the disc.

As shown in Figure 3, the suspension flow is established when the suspension enters the holes (6) in the flat surfaces and is radially ejected, by action of the centrifugal force, through the two holes (8) made in the side cylindrical surface after crossing the inner ducts (7). The flow ejected by action of the centrifugal force falls onto the surface of the deposition sheets fixed to the tube support (9), fostering the deposition of adherent particles on such surface. By controlling the rotor (2) turning speed, a maximum deposition of adherent particles is achieved.

An agitator (13) may also optionally be arranged at the lower end of the shaft (3) to simulate deposition in stirred tanks, and tests may be repeated in such conditions.

The sample vessel (14) containing the suspension sample to be analysed and the rotor (2) and the assembly of the tube support (9) and deposition sheets may be arranged in a thermostatic bath to keep the sample at the desired test temperature.

The adherent matter deposited on the deposition sheets fixed to the tube support (9) can be quantified using gravimetric methods. The deposits formed may also be separated by flushing the surface of the deposition sheets to be subsequently analysed. The adherent matter detached using this process can be chemically analysed by any suitable chemical methods for the matter to be characterised or be determined gravimetrically as a residue after the solvent used is evaporated to be separated from the deposition means.

The equipment subject of this invention is suitable for studying the potential for the deposition of materials of an adherent nature present in any suspension, specifically a paper pulp suspension. The equipment provided by this invention allows the adherent compounds deposited on the deposition sheets in the form of deposits to be quantitatively measured and, if necessary, said deposits to be separated to be qualitatively analysed, and it is therefore suitable to be used in a method for determining the adherent matter, their deposition potential and as a model for studying the various process variables in the potential for the deposition of said substances.

As a non-limiting example, the equipment of this invention can be used:
- for characterising contaminants of an adherent nature present in paper pulp suspensions or in paper pulp manufacturing process waters;
- for determining the potential for the deposition of adherent matter contained in the suspension under certain process conditions and, therefore, for determining their recyclability;
- for studying the influence of shearing on the potential for the deposition of adherent matter on smooth and porous surfaces;
- for predicting the influence of variations to process conditions on the formation of deposits, for instance when the plant water circuit is closed;
- as a diagnostic method for determining the efficiency of the methods for chemically controlling adherent matter contained in paper pulp suspensions or in process waters;
- for studying the potential for the deposition of dissolved, colloidal materials under differing conditions as regards temperature, deposition time, rotor turning speed, ionic strength, consistency, turbulence or other process variables; and
- in determining the efficiency of a certain reagent or set of reagents, for instance, the following variables can be studied: reagent quantity, combination of several reagents, different types of adherent contaminants, shearing, etc.

The use of the equipment for the deposition of adherent matter contained in a suspension provided by this invention comprises the following stages:
- preparing the equipment for the deposition of adherent matter contained in a suspension;
- placing such equipment in contact with the suspension sample to be analysed; and
- fixing the conditions for the deposition of adherent substances to take place.

The deposition means are subsequently removed in order to carry out a gravimetric determination and a chemical analysis of the substances adhered to said deposition means, as required.

### EXAMPLES

The following examples are used to illustrate the use of an equipment for the deposition of adherent matter contained in a suspension provided by this invention, which should not be deemed to limit the scope of the invention.

### EXAMPLE 1

### Making a deposition equipment

An equipment for the deposition of adherent matter contained in a suspension of paper pulp was made similar to that shown in Figure 2, comprising:
- a rotor consisting of a stainless steel shaft having a length of 210 mm and a diameter of 8 mm, connected to a 15 w 12 v motor with a 5.34:1 gear ratio, with which peak turning speeds of 750 rpm could be achieved, turning the rotor and allowing its turning speed to be adjusted, and connected at its other end, after crossing a cylindrical teflon disc, with a diameter of 20 mm and a height of 150 mm, to a stainless steel propeller agitator comprising 3 blades angled at 25° and a diameter of 60 mm from the centre of the shaft to the end of the blades, said disc having two 10 mm holes in each of the flat disc surfaces, arranged symmetrically to the shaft, at a distance of 9 mm from the edge of the cylinder, and interconnected through respective inner ducts, in manner similar to that shown in Figure 3, each ending in outlet holes with a diameter of 10 mm, lying in the side surface of the disc;
- an assembly comprising a stainless steel tube support with a diameter of 70 mm and a height of 90 mm and stainless steel sheets for the deposition of adherent matter with a thickness of 0.0025 mm; the lower sheet measures 50 x 220 mm and the outer sheet 90 x 220 mm, and
- stainless steel rectangular deflecting walls measuring 23 mm x 114 mm and a thickness of 3 mm, connected by means of screws to the deposition container and a support on which the motor stands.

### EXAMPLE 2

### Influence of the process variables

This test was made in order to study the influence of the various process variables on the potential for the deposition of organic adherent matter present in a sample similar to that of a paper pulp suspension, in order to determine the maximum deposition conditions. In particular, the potential for the deposition of dissolved, colloidal adherent matter under certain conditions as regards temperature, deposition time and rotor turning speed was studied.

The equipment described in Example 1 was used to make this test, using two stainless steel sheets with a thickness of 0.0025 mm as the deposition material, the inner sheet measuring 50 x 220 mm and the outer sheet measuring 90 x 220 mm, and further a synthetic paper pulp suspension in a solution containing a resinous compound present as a contaminant in the papermaking waters.

The resinous compound solution was prepared dissolving 50 grams (g) of tall oil distilled in ethanol containing 12.5 g of 85% potassium hydroxide and adjusting the final volume to 250 ml, at -6°C. 6 millilitres (mL) of said solution with a concentration of 400.3 mg/L in resinous compounds were then taken. Paper pulp was added to said solution until a suspension was obtained characterised as follows:
pH = 10
Conductivity = 1.26 mS/cm
Pulp consistency = 0.3% (i.e., 0.3 g of paper pulp in 100 mL of water).

A sample of the suspension to be analysed was then placed in a sample vessel, the assembly comprising the tube support and stainless steel sheets attached thereto by means of pins, the agitator and the disc were inserted therein, and the tuning speed, temperature and time conditions were tested as follows:
- turning speed: 150-450 revolutions per minute (rpm)
- temperature: 30-70 degrees Centigrade (°C); and
- time: 0-180 minutes.

In order for the analysed sample to be at the desired temperature, a thermostatic bath was arranged containing the sample vessel which in turn contained the rotor and the assembly comprising the tube support and stainless steel sheets for the deposition of adherent matter fixed thereto by means of pins.

At the conclusion of each test, the assembly comprising the tube support and stainless steel deposition sheets was removed, the stainless steel deposition sheets were separated, flushed slightly with cold water and dried until a constant weight was obtained, thereby for the materials deposited to be determined by weight difference.

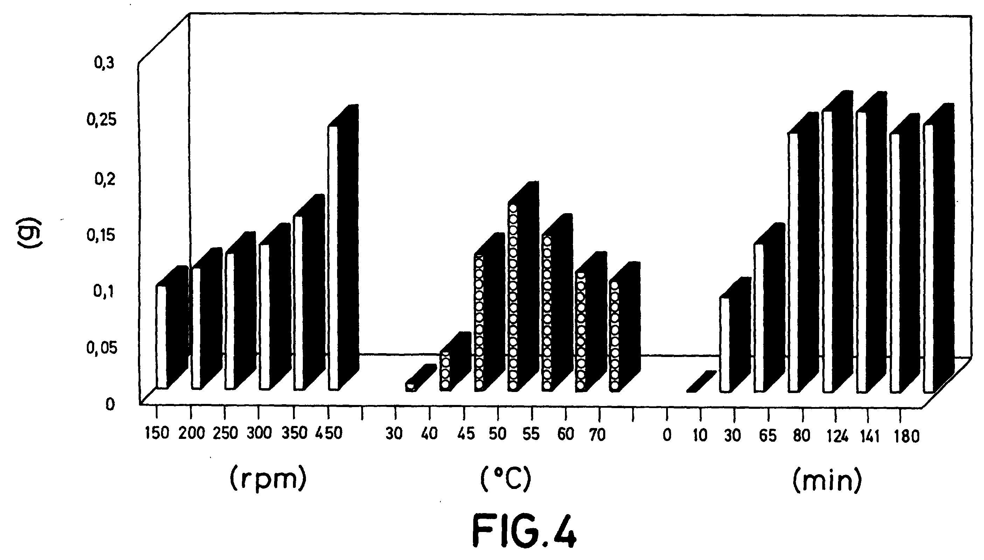

The results obtained are shown in Figure 4 in which it may be seen that the optimum conditions for the deposition of adherent matter contained in the tested synthetic suspension are a turning speed of 450 rpm, a temperature of 50°C and a time of 80 minutes.

The materials, shapes, size and arrangement of the elements of the equipment may be varied provided that this does not alter the essence of the invention.

## Claims

1. An equipment for the deposition of adherent matter contained in a suspension, comprising:
- a rotor (2) consisting of a shaft (3) operatively connected at one end to a means (4) turning the rotor and allowing its turning speed to be adjusted and, at the other end, to a disc (5) having at least two holes (6), each one lying in each of the flat disc (5) surfaces, interconnected through an inner duct (7) having an outlet hole (8) lying in the side surface of the disc (5); and
- an assembly comprising a tube support (9) and sheets for the deposition of adherent matter contained in the sample to be analysed for the deposition of adherent matter.

2. An equipment for the deposition of adherent matter contained in a suspension, as in claim 1, characterised by including walls (10) connected by means of fixing elements (11) to an assembly comprising a tube support (9) and deposition sheets and a support (12).

3. An equipment for the deposition of adherent matter contained in a suspension, as in claim 1, characterised by comprising a propeller agitator (13) at the end of the shaft (3) beneath the disc (5).

4. An equipment for the deposition of adherent matter contained in a suspension, as in claim 1, characterised in that the means (4) turning the rotor (2) and allowing its turning speed to be adjusted, comprise or are driven by a motor.

5. An equipment for the deposition of adherent matter contained in a suspension, as in claim 1, characterised in that the disc (5) can have a variable number of holes (6) in each of the two flat disc surfaces, those on the top surface interconnected in twos with those on the underside of the disc (5) by means of inner ducts ending in an outlet hole (8) lying in the side wall of the disc.

6. An equipment for the deposition of adherent matter contained in a suspension, as in claim 5, characterised in that said disc (5) has 2 pairs of holes (6) lying in the flat disc surfaces, symmetrically arranged with respect to the shaft (3).

7. An equipment for the deposition of adherent matter contained in a suspension, as in claims 1, 5 and 6, wherein said disc (5) is made of a material having a low deposition potential.

8. An equipment for the deposition of adherent matter contained in a suspension, as in claims 5 and 6, wherein said disc (5) is made of a material treated with a non-stick coating material of polytetrafluoroethylene, teflon and polymers having similar surface characteristics.

9. An equipment for the deposition of adherent matter contained in a suspension, as in claim 1, characterised in that the sheet for the deposition of adherent matter fixed to the tube support (9) consists of a coating or supporting material selected from a group comprising stainless steel, carbon steel, nylon, polyethylene and polyester fabrics and blankets.

10. An equipment for the deposition of adherent matter contained in a suspension, as in claim 9, characterised in that the tube support (9) is made of a material selected from a group consisting of another supporting material, such as stainless steel, carbon steel and ground glass.
